# EUROPÄISCHE PATENTANMELDUNG

(11) **EP 0 714 679 A1**
(43) Veröffentlichungstag der Anmeldung: **05.06.1996**
(21) Anmeldenummer: 95117776.5
(22) Anmeldetag: 11.11.1995
(51) Int. Cl.: A62D 3/00, F23G 5/08

(54) **Verfahren zum Entsorgen von Reststoffen aus Abfallverbrennungsanlagen sowie Aktivkoks und/oder Aktivkohle**

(30) Priorität: 03.12.1994 DE 4443088
(71) Anmelder: METALLGESELLSCHAFT AG, D-60323 Frankfurt am Main (DE)
(72) Erfinder: Rizzon, John, Dr., D-51503 Rösrath (DE)

(57) **Zusammenfassung**

Die vorliegende Erfindung beschreibt ein Verfahren zum Entsorgen von Reststoffen aus Abfallverbrennungsanlagen sowie Aktivkoks und/oder Aktivkohle. Dazu wird der Reststoff sowie Aktivkoks und/oder Aktivkohle in den Ringschacht (3) der Primärkammer (2) des Ofens (1) eingebracht. In der Primärkammer (2) wird eine Temperatur von 1250 °C bis 1500 °C eingestellt. Das ablaufende geschmolzene Material verläßt die Primärkammer (2) mit den Rauchgasen durch den zentralen Auslauf (4). Das geschmolzene Material wird durch die Sekundärkammer (5) geleitet und als Schlacke ausgetragen. Die vorliegende Erfindung beschreibt weiter eine Vorrichtung für dieses Verfahren, wobei in der Ofendecke (10) der Primärkammer (2) des Ofens (1) ein oder mehrere Brenner (7) angeordnet sind und an einer oder mehreren Stellen (22) der Ofendecke (10) Sekundärluft in die Primärkammer (2) eingeleitet wird sowie an einer oder mehreren Stellen (23) der Ofendecke (10) Tertiärluft in die Primärkammer (2) eingeleitet wird.

## Beschreibung

Die vorliegende Erfindung betrifft ein Verfahren und eine Vorrichtung zum Entsorgen von Reststoffen aus Abfallverbrennungsanlagen sowie Aktivkoks und/oder Aktivkohle.

Das Abgas einer Müllverbrennungsanlage wird einer Rauchgasbehahdlung, wie zum Beispiel Naßwäsche sowie Halbtrocken- oder Trockenverfahren unterzogen. Bei der Rauchgasbehandlung fällt benutztes Adsorptionsmittel als trockenes oder feuchtes, feinkörniges Pulver oder Staub als Reststoff an, das mit toxischem Material und Schwermetallen belastet ist. Um die niedrigen Grenzwerte für halogenierte Dibenzodioxine und -furane und Schwermetalle, insbesondere Cadmium, Quecksilber und Arsen einzuhalten, wird eine weitere Reinigungsstufe nachgeschaltet. Dafür werden Festbettherdofenkoks- und Aktivkohlefilter verwendet. Herdofenkoks wird auch als Aktivkoks bezeichnet. Üblich sind auch Flugstromverfahren, bei denen Herdofenkoks. Aktivkohle oder Gemische davon sowie Trägermaterial, wie Ca(OH)₂, Sorbalit oder andere inerte Stoffe eingesetzt werden. In der nachgeschalteten Reinigungsstufe fallen insbesondere gebrauchter Aktivkoks und gebrauchte Aktivkohle an, die mit toxischen Stoffen und Schwermetallen beladen sind und als kritischer Sonderabfall eingestuft werden. Ihre Deponierung ist schwierig, teuer und daher sehr unwirtschaftlich. Die Entsorgung von Aktivkoks und Aktivkohle erfolgt zur Zeit thermisch durch Verbrennung in einem Reaktor, zum Beispiel einem Drehrohrofen. Diese Entsorgung ist aufgrund der hohen Temperatur, die aufgebracht werden muß, unwirtschaftlich.

Aufgabe der vorliegenden Erfindung ist es, ein wirtschaftliches und umweltschonendes Verfahren zum Entsorgen von Reststoffen aus Abfallverbrennungsanlagen sowie Aktivkoks und/oder Aktivkohle breitzustellen, wobei bei niedrigen Temperaturen umweltverträgliche Stoffen bei reduziertem Volumen erhalten werden, die weiterverarbeitet oder kostengünstig deponiert werden können.

Die der vorliegenden Erfindung zugrundeliegende Aufgabe wird durch ein Verfahren zum Entsorgen von Reststoffen aus Abfallverbrennungsanlagen sowie Aktivkoks und/oder Aktivkohle gelöst, bei dem
a) Reststoff aus Abfallverbrennungsanlagen sowie Aktivkoks und/oder Aktivkohle in die Primärkammer des Ofens eingebracht werden,
b) in der Primärkammer eine Temperatur von 1250 °C bis 1500 °C eingestellt wird,
c) das ablaufende geschmolzene Material mit Rauchgasen die Primärkammer verläßt, das geschmolzene Material durch die Sekundärkammer geleitet und als Schlacke ausgetragen wird.

Erfindungsgemäß werden zum Einschmelzen heizwertreiche Brennstoffe, wie Öle, Gase, kohlenstoffhaltige, feste Brennstoffe, z. B. Kohle, Klärschlamm, Koks oder Aktivkohle sowie heizwertreiche Abfallstoffe, wie geschredderte, feste Abfälle, Holzabfälle, Altöle, flüssige und pastöse Sonderabfälle eingesetzt.

Vorteile des erfindungsgemäßen Verfahrens sind, daß bei diesen Temperaturen brennbare Bestandteile und toxische Verbindungen, wie halogenierte Dibenzodioxine und Dibenzofurane zersetzt werden. Mineralische Bestandteile und Schwermetalle werden in eine dichte laugungsresistente Schlacke überführt. Es wird ein umweltfreundliches Produkt mit reduziertem Volumen erhalten, das im Straßenbau, in der Bauindustrie und in der Feuerfestprodukt-Industrie verwendet werden kann.

Eine bevorzugte Ausgestaltung der Erfindung ist, daß gemäß Verfahrensstufe (b) eine Temperatur von 1300 °C bis 1400 °C eingestellt wird. In diesem Temperaturbereich werden die besten Ergebnisse für die Einschmelzung von Reststoffen aus Abfallverbrennungsanlagen erreicht.

Eine bevorzugte Ausgestaltung der Erfindung ist, daß Aktivkoks und/oder Aktivkohle unbehandelt dem Reststoff zugemischt werden und das Gemisch in die Primärkammer eingebracht wird. Das hat den Vorteil, daß ein guter Ausbrand erreicht wird.

Eine bevorzugte Ausgestaltung der Erfindung ist, daß Aktivkoks und/oder Aktivkohle direkt in die Primärkammer eingebracht werden. Das hat den Vorteil, daß ein guter Ausbrand erreicht wird und ein niedriger Kohlenstoffgehalt in der Schlacke erhalten wird. Noch vorteilhafter ist es wenn der kohlenstoffhaltige Reststoff gemahlen wird und mit einem Staubbrenner im Ofen verbrannt wird.

Eine bevorzugte Ausgestaltung der Erfindung ist, daß Aktivkoks und/oder Aktivkohle auf eine Korngröße < 1 mm zerkleinert und direkt über den Brenner in die Primärkammer eingeblasen wird. Bei dieser Korngröße wird ein besonders guter Ausbrand erreicht.

Eine bevorzugte Ausgestaltung der Erfindung ist, daß Aktivkoks und/oder Aktivkohle mit flüssigen und/oder pastösen Brennstoffen gemischt, das Gemisch dem Reststoff zugemischt und mit dem Reststoff in die Primärkammer eingebracht wird oder das Gemisch direkt in die Primärkammer eingebracht wird. Damit werden besonders gute Ergebnisse bei der Einschmelzung erreicht.

Eine bevorzugte Ausgestaltung der Erfindung ist, daß Aktivkoks und/oder Aktivkohle mit Zusatzstoffen dem Reststoff zugemischt werden und das Gemisch mit dem Reststoff in die Primärkammer eingebracht wird oder das Gemisch direkt in die Primärkammer eingebracht wird und wobei als Zusatzstoffe ein oder mehrere der schmelzpunktherabsetzenden Stoffe, wie Filter- und Kesselasche aus Haus- und Sondermüllverbrennungsanlagen, Laugungs- und Jarosit-Rückstände, Schlämme aus Fällungs-, Lösungs-, Farbherstellungs- und Phosphatierverfahren, metallurgische Schlacken, Krätzen und Stäube, Metall- sowie Galvanikschlämme und -stäube, Elektronikschrott sowie Gießereisand verwendet werden. Diese Additive bewirken eine besonders starke Herabsetzung des Schmelzpunktes.

Eine bevorzugte Ausgestaltung der Erfindung ist, daß dem Gemisch getrockneter Klärschlamm zugemischt wird. Durch diese erfindungsgemäße Variante ist die Entsorgung von Klärschlamm möglich. Es hat sich überraschenderweise gezeigt, daß durch die Zugabe von Klärschlamm sehr gute Ergebnisse bei der Einschmelzung von Reststoffen aus Abfallverbrennungsanlagen erreicht werden.

Eine bevorzugte Ausgestaltung der Erfindung ist, daß Aktivkoks und/oder Aktivkohle mit Rostasche gemischt werden und das Gemisch mit dem Reststoff in die Primärkammer eingebracht wird oder das Gemisch direkt in die Primärkammer eingebracht wird. Durch diese erfindungsgemäße Variante ist die Entsorgung von Rostasche möglich. Es hat sich überraschenderweise gezeigt, daß ein Gemisch aus Aktivkoks und/oder Aktivkohle mit Rostasche energiesparend und sehr wirkungsvoll eingeschmolzen werden kann.

Eine bevorzugte Ausgestaltung der Erfindung ist, daß Rostasche in einem Magnetabscheider von eisenhaltigen Stoffen abgetrennt wird, die von eisenhaltigen Stoffen abgetrennte Rostasche gesiebt wird, wobei eine Grobfraktion mit einer Korngröße > 50 mm abgetrennt wird und eine Feinfraktion mit einer Korngröße < 50 mm in die Primärkammer eingebracht wird. Dadurch werden sehr gute Ergebnisse bei der Einschmelzung von Rostasche erreicht.

Eine bevorzugte Ausgestaltung der Erfindung ist, daß die Feinfraktion mit einer Korngröße < 50 mm gesiebt wird und eine Fraktion der Rostasche mit einer Korngröße von 2 mm bis 50 mm abgetrennt wird und eine Fraktion der Rostasche mit einer Korngröße < 2 mm in die Primärkammer eingebracht wird. Damit werden die besten Ergebnisse bei der Einschmelzung von Rostasche erreicht. Die Einschmelzung kann energiesparend durchgeführt werden.

Eine bevorzugte Ausgestaltung der Erfindung ist, daß in der Primärkammer eine Luftzahl von λ = 0.7 bis λ = 1.3 eingestellt wird.In diesem Bereich für die Luftzahl werden die besten Ergebnisse für die Einschmelzung von Reststoffen aus Abfallverbrennungsanlagen sowie Aktivkoks und/oder Aktivkohle erreicht.

Eine bevorzugte Ausgestaltung der Erfindung ist, daß in der Primärkammer eine Luftzahl von λ ≦ 1 eingestellt wird. Unter diesen erfindungsgemäßen Bedingungen werden Schwermetalle stärker verflüchtigt.

Eine bevorzugte Ausgestaltung der Erfindung ist, daß in der Primärkammer eine Luftzahl von λ ≧ 1 eingestellt wird. Unter diesen erfindungsgemäßen Bedingungen wird ein guter Ausbrand erreicht, insbesondere wenn heizwertreiche Abfallstoffe eingesetzt werden.

Eine bevorzugte Ausgestaltung der Erfindung ist, daß mit Sauerstoff angereicherte Luft in den Ofen eingeleitet wird. Durch die Verwendung von mit Sauerstoff angereicherter Luft wird vorteilhaft der Brennstoffbedarf und die Abgasmenge sowie die NOₓ-Konzentration im Abgas reduziert.

Erfindungsgemäß ist eine Vorrichtung zum Einschmelzen von Reststoffen aus Abfallverbrennungsanlagen vorgesehen, bei der in der Ofendecke der Primärkammer des Ofens ein oder mehrere Brenner angeordnet sind und an einer oder mehreren Stellen der Ofendecke Sekundärluft in die Primärkammer eingeleitet wird sowie an einer oder mehreren Stellen der Ofendecke Tertiärluft in die Primärkammer eingeleitet wird. Durch diese erfindungsgemäße Maßnahme wird die NOₓ-Konzentration im Abgas wesentlich verringert.

Eine bevorzugte Ausgestaltung der Erfindung ist eine Vorrichtung, bei der als Primär- und Sekundärluft mit Sauerstoff angereicherte Luft in die Primärkammer eingeleitet wird. Dadurch werden bei der Verringerung der NOₓ-Konzentration die besten Ergebnisse erreicht.

Erfindungsgemäß ist die Verwendung eines Ofens zum Einschmelzen von Reststoffen aus Abfallverbrennungsanlagen vorgesehen.

Die Erfindung wird im folgenden anhand einer Zeichnung und eines Beispiels näher erläutert.

### Zeichnung

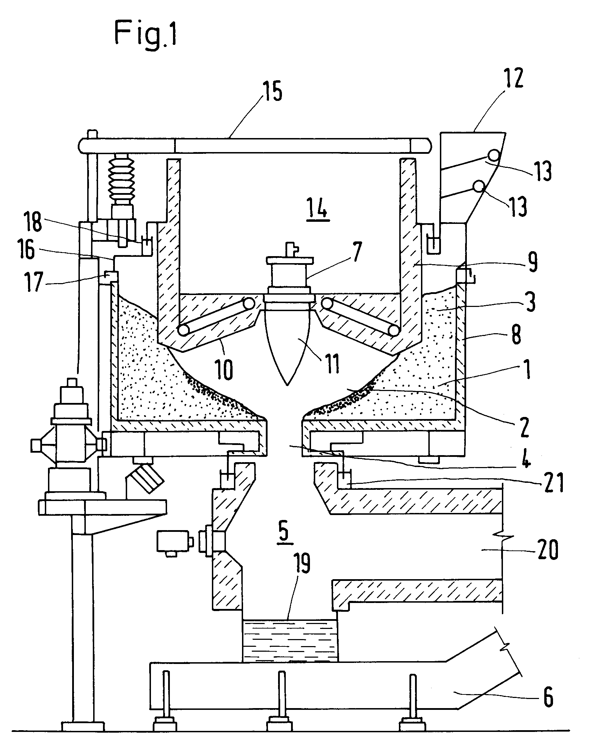

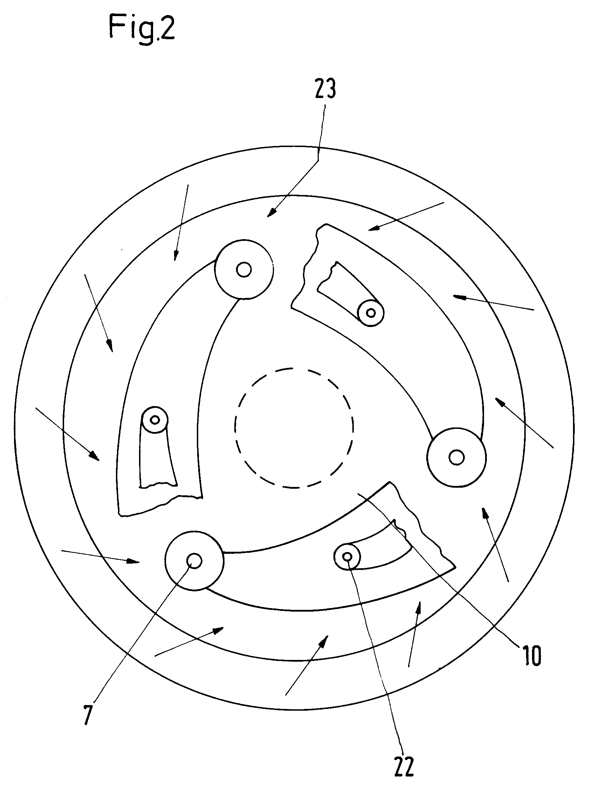

Die Zeichnung enthält Fig. 1 und Fig. 2.
- Fig. 1: zeigt einen Längsschnitt eines KSMF-Schmelzofens.
- Fig. 2: zeigt die Anordnung von drei Brennern und Einleitungsöffnungen für Sekundär- und Tertiärluft in der Ofendecke der Primärkammer des Ofens.

In Fig. 1 ist ein Oberflächen-Einschmelzofen (1), ein sogenannter KSMF-Schmelzofen dargestellt. Die Abkürzung KSMF steht für KUBOTA-Surface-Melting-Furnace. Der KSMF-Schmelzofen und das Einschmelzverfahren sind u. a. in dem Prospekt "KUBOTA Melting Furnace for Sewage Sludge" der KUBOTA Corporation, Osaka, Japan beschrieben. Der Einschmelzofen (1), auch als Ofen (1) bezeichnet, besteht aus einem zylindrischen Außenmantel (8) in den ein zylindrischer Innenmantel (9) konzentrisch eingehängt ist. Der Außenmantel (8) dreht sich mit 0.5 bis 5 U/h. Zwischen dem Außenmantel (8) und dem Innenmantel (9) wird der Ringschacht (3) und die Primärkammer (2) gebildet. Der Innenmantel (9) läßt sich heben und senken, wodurch die Größe der Primärkammer (2) und des Ringschachts (3) an die benötigte Kapazität angepaßt wird. Im Innenraum (14) des Innenmantels (9) ist zentrisch ein Brenner (7) angeordnet, dessen Flamme (11) in der Primärkammer (2) brennt. Im Innenraum (14) des Innenmantels (9) können alternativ Brenner (7), (7') oder (7), (7') und (7'') auf einem Kreis angeordnet sein, deren Flammen (11), (11') und (11'') in der Primärkammer (2) brennen.Der Innenraum (14) ist mit einem verfahrbaren Ofendeckel (15) verschlossen. Der Ofen (1) weist zum Einfüllen des Materials einen Trichter (12) auf, in dem zwei Doppelpendelklappen (13) angeordnet sind, wodurch der Ofen (1) gegen Eindringen von Falschluft abgesichert ist. Zwischen dem feststehenden Ofendeckel (16) und dem rotierenden Außenmantel (8) sowie dem feststehenden Innenmantel (9) sind nach dem Stand der Technik Wasserdichtungen (17, 18) angebracht. Am Ofen (1) befindet sich eine weitere Wasserdichtung (21). Die Wasserdichtungen (17, 18, 21) bieten einen gasdichten Abschluß und gewährleisten einen schnellen Druckausgleich bei auftretenden Druckerhöhungen. Im Boden der Primärkammer (2) ist zentrisch ein Auslauf (4), auch als Schlackenabzug bezeichnet, angebracht. Der Auslauf (4) bilde die Verbindung zwischen der Primärkammer (2) und der Sekundärkammer (5). Der Auslauf für die Schmelze aus der Sekundärkammer (5) befindet sich in einem Wasserbad (19). Durch das Wasserbad (19) wird ein gasdichter Abschluß erreicht. Das Wasserbad (19) steht in Verbindung mit dem Naßentschlacker (6). Die Rauchgase werden aus der Sekundärkammer (5) über den Ausgang (20) abgezogen und in an sich bekannter Weise gereinigt und abgeführt.

Das Material wird über den Trichter (12) in den Ringschacht (3) eingefüllt und durch die Drehung des Außenmantels (8) gleichmäßig verteilt. Das im Ringschacht (3) befindliche Material böscht sich von der Unterkante des feststehenden Innenmantels (9) konusförmig nach innen zum zentralen Auslauf (4) der Primärkammer (2) ab. Der eigentliche Reaktionsraum für den Schmelzprozeß wird so geschaffen. Die Flamme (11) des Brenners (7) bewirkt den Schmelzprozeß. An der Oberfläche des Materials entsteht eine 2 cm bis 5 cm dicke, schmelzflüssige Oberflächenschicht. Die ablaufende Schmelze verläßt zusammen mit den Rauchgasen die Primärkammer (2) durch den zentralen Auslauf (4). Die Schmelze fällt durch die Sekundärkammer (5) in das Wasserbad (19) wo sie granuliert. Der Naßentschlacker (6) fördert das Granulat mit einer Korngröße < 10 mm nach außen.

Fig. 2 zeigt die Anordnung von drei Brennern (7, 7', 7'') und drei Einleitungsöffnungen (22, 22', 22'') für Sekundärluft sowie gleichmäßig am äußeren Kreis verteilte mehrere Einleitungsöffnungen (23) für Tertiärluft in der Ofendecke (10) der Primärkammer (2) des Ofens (1). Die Flammen (11, 11', 11'') der Brenner (7, 7', 7'') brennen in der Primärkammer (2).

### Beispiel

1143 kg/h Reststoff als Staub aus einer Hausmüllverbrennungsanlage, 429 kg/h Reststoff als Staub aus einer Industriemüllverbrennungsanlage und 200 kg/h auf eine Korngröße von < 50 mm zerkleinertes Altglas wurden gemischt und kontinuierlich in die Primärkammer eines KSMF-Schmelzofens mit einem Innendurchmesser von 2 m eingebracht. In der Primärkammer wurde eine Temperatur von 1350 °C bei einer Luftzahl λ = 1.01 eingestellt. Das Gemisch wies einen Schmelzpunkt von 1260°C auf. Die Verbrennungsluft wurde auf 300 °C vorgewärmt. In der Primärkammer wurde die erforderliche Schmelzenergie durch Verbrennen von 630 kg/h Aktivkoks und 60 kg/h Öl bewirkt. Der Aktkoks wurde in einer Schwingmühle auf eine Korngröße < 500 µm, 80 % < 80 µm zerkleinert. Der Aktivkoks und das Öl wurden gemischt und über drei Brenner eingeleitet. In der Sekundärkammer wurde ein Sauerstoffgehalt von 6.5 Vol.-% eingestellt. Die Temperatur des Abgases aus der Primärkammer sinkt in der Sekundärkammer nach einer Verweilzeit von 2 Sekunden auf 1020 °C. Aus dem Naßentschlacker wurden 1385 kg/h Schmelzgranulat mit einer Korngröße von 1 mm bis 5 mm ausgetragen. Das Schmelzprodukt hatte eine Dichte von 3g/Nm³. Am Ausgang der Sekundärkammer wurden 11000 Nm³/h Abgas gemessen. Das Abgas aus der Sekundärkammer hatte einen NOₓ-Gehalt von 180 mg/Nm³ und einen CO-Gehalt von 15 mg/Nm³.

| **Bezugszeichenliste** | |
|---|---|
| Oberflächen-Einschmelzofen | (1) |
| Primärkammer | (2) |
| Ringschacht | (3) |
| Auslauf | (4) |
| Sekundärkammer | (5) |
| Naßentschlacker | (6) |
| Brenner | (7, 7', 7'') |
| rotierender Außenmantel | (8) |
| feststehender Innenmantel | (9) |
| Ofendecke | (10) |
| Flamme | (11, 11', 11'') |
| Trichter | (12) |
| Doppelpendelklappen | (13) |
| Innenraum | (14) |
| Ofendeckel | (15) |
| feststehender Ofendeckel | (16) |
| Wasserdichtungen | (17, 18) |
| Wasserbad | (19) |
| Ausgang | (20) |
| Wasserdichtung | (21) |
| Einleitungsöffnungen | (22, 22', 22'') |
| Einleitungsöffnungen | (23) |

## Patentansprüche

1. Verfahren zum Entsorgen von Reststoffen aus Abfallverbrennungsanlagen sowie Aktivkoks und/oder Aktivkohle, bei dem
a) der Reststoff sowie Aktivkoks und/oder Aktivkohle in die Primärkammer (2) des Ofens (1) eingebracht werden,
b) in der Primärkammer (2) eine Temperatur von 1250 °C bis 1500 °C eingestellt wird,
c) das ablaufende geschmolzene Material mit Rauchgasen die Primärkammer (2) verläßt, das geschmolzene Material durch die Sekundärkammer (5) geleitet und als Schlacke ausgetragen wird.

2. Verfahen nach Anspruch 1, bei dem gemäß Verfahrensstufe (b) eine Temperatur von 1300 °C bis 1400 °C eingestellt wird.

3. Verfahren nach den Ansprüchen 1 oder 2, bei dem Aktivkoks und/oder Aktivkohle unbehandelt dem Reststoff zugemischt werden und das Gemisch in die Primärkammer (2) eingebracht wird.

4. Verfahren nach den Ansprüchen 1 oder 2, bei dem Aktivkoks und/oder Aktivkohle direkt in die Primärkammer (2) eingebracht werden.

5. Verfahren nach den Ansprüchen 1 oder 2, bei dem Aktivkoks und/oder Aktivkohle auf eine Korngröße < 1 mm zerkleinert und direkt über den Brenner (7) in die Primärkammer (2) eingeblasen wird.

6. Verfahren nach den Ansprüchen 1 oder 2, bei dem Aktivkoks und/oder Aktivkohle mit flüssigen und/oder pastösen Brennstoffen gemischt, das Gemisch dem Reststoff zugemischt und mit dem Reststoff in die Primärkammer (2) eingebracht wird oder das Gemisch direkt in die Primärkammer (2) eingebracht wird.

7. Verfahren nach den Ansprüchen 1 oder 2, bei dem Aktivkoks und/oder Aktivkohle mit Zusatzstoffen dem Reststoff zugemischt werden und das Gemisch mit dem Reststoff in die Primärkammer (2) eingebracht wird oder das Gemisch direkt in die Primärkammer (2) eingebracht wird und wobei als Zusatzstoffe ein oder mehrere der schmelzpunktherabsetzenden Stoffe, wie Filter- und Kesselasche aus Haus- und Sondermüllverbrennungsanlagen, Laugungs- und Jarosit-Rückstände, Schlämme aus Fällungs-, Lösungs-, Farbherstellungs- und Phosphatierverfahren, metallurgische Schlacken, Krätzen und Stäube, Metall- sowie Galvanikschlämme und -stäube, Elektronikschrott sowie Gießereisand verwendet werden.

8. Verfahren nach Anspruch 7, bei dem dem Gemisch getrockneter Klärschlamm zugemischt wird.

9. Verfahren nach den Ansprüchen 1 oder 2, bei dem Aktivkoks und/oder Aktivkohle mit Rostasche gemischt werden und das Gemisch mit dem Reststoff in die Primärkammer (2) eingebracht wird oder das Gemisch direkt in die Primärkammer (2) eingebracht wird

10. Verfahren nach Anspruch 9, bei dem Rostasche in einem Magnetabscheider von eisenhaltigen Stoffen abgetrennt wird, die von eisenhaltigen Stoffen abgetrennte Rostasche gesiebt wird, wobei eine Grobfraktion mit einer Korngröße > 50 mm abgetrennt wird und eine Feinfraktion mit einer Korngröße < 50 mm in die Primärkammer (2) eingebracht wird.

11. Verfahren nach den Ansprüchen 9 und 10, bei dem die Feinfraktion mit einer Korngröße < 50 mm gesiebt wird und eine Fraktion mit einer Korngröße von 2 mm bis 50 mm abgetrennt wird und eine Fraktion mit einer Korngröße < 2 mm in die Primärkammer (2) eingebracht wird.

12. Verfahren nach den Ansprüchen 1 bis 11, bei dem in der Primärkammer (2) eine Luftzahl von λ = 0.7 bis λ = 1.3 eingestellt wird.

13. Verfahren nach den Ansprüchen 1 bis 12, bei dem in der Primärkammer (2) eine Luftzahl von λ ≦ 1 eingestellt wird.

14. Verfahren nach den Ansprüchen 1 bis 12, bei dem in der Primärkammer (2) eine Luftzahl von λ ≧ 1 eingestellt wird.

15. Verfahren nach den Ansprüchen 1 bis 14, bei dem mit Sauerstoff angereicherte Luft in den Ofen (1) eingeleitet wird.

16. Vorrichtung zum Entsorgen von Reststoffen aus Abfallverbrennungsanlagen gemäß den Ansprüchen 1 bis 15, bei der in der Ofendecke (10) der Primärkammer (2) des Ofens (1) ein oder mehrere Brenner (7) angeordnet sind und an einer oder mehreren Stellen (22) der Ofendecke (10) Sekundärluft in die Primärkammer (2) eingeleitet wird sowie an einer oder mehreren Stellen (23) der Ofendecke (10) Tertiärluft in die Primärkammer (2) eingeleitet wird.

17. Vorrichtung nach Anspruch 16, bei der als Primär- und Sekundärluft mit Sauerstoff angereicherte Luft in die Primärkammer (2) eingeleitet wird.

18. Verwendung eines Ofens (1) gemäß den Ansprüchen 16 und 17 zum Einschmelzen von Reststoffen aus Abfallverbrennungsanlagen.
